# EUROPEAN PATENT SPECIFICATION

(11) **EP 1 119 238 B1**
(45) Date of publication and mention of the grant of the patent: **02.03.2005**
(21) Application number: 00948410.6
(22) Date of filing: 18.07.2000
(51) Int. Cl.: A01K 13/00, A01K 1/00, A01K 1/12, A01K 1/02

(54) **A METHOD OF LURING AN ANIMAL TO A PREDETERMINED PLACE**
VERFAHREN ZUM ANLOCKEN EINES TIERES ZU EINEM VORBESTIMMTEN ORT
PROCEDE PERMETTANT D'ATTIRER UN ANIMAL EN UN LIEU DETERMINE

(30) Priority: 11.08.1999 NL 1012808
(43) Date of publication of application: 01.08.2001
(60) Divisional application: 04077968.8
(73) Proprietor: Lely Enterprises AG, 6300 ZUG (CH)
(72) Inventor: VERBURG, Carlo, NL-2641 NG Pijnacker (NL); VAN DER LELY, Alexander, NL-3065 NA Rotterdam (NL); FRANSEN, Renatus, Ignatius, Josephus, NL-3135 ZD Vlaardingen (NL); VAN DEN BERG, Karel, NL-2971 BR Bleskensgraaf (NL)
(74) Representative: Corten, Maurice Jean F.M.
(86) International application number: PCT/NL2000/000505
(87) International publication number: WO 2001/010198

(56) References cited:
- EP-A- 0 728 413
- WO-A-97/43897
- WO-A-98/04121
- GB-A- 2 313 032
- US-A- 4 693 852

## Description

The invention relates to a method of luring an animal to a predetermined place, such as e.g. a milking stall and/or a feeding stall, according to the preamble of claim 1.

Such a method is known from WO-A-97 43897.

The invention aims at providing an alternative method.

In accordance with the invention, this is achieved in that regulation of the climate parameter is performed during a previously fixed duration of the action and/or the treatment.

According to an inventive feature, the degree of humidity is regulated and, more in particular, increased. According to an aspect of the invention, increasing the degree of humidity can be realized by applying liquid between the hairs and/or on the skin. This can be achieved more in particular by atomizing the liquid to a fine spray and subsequently dispersing same. According to an inventive feature, it is also possible to apply the liquid directly between the hairs and/or on the skin of the animal by rubbing and/or brushing. Especially during warm weather this has proved to be a pleasant experience for the animals. In order to avoid the use of too much liquid for wetting the animal, according to an inventive feature, a maximum amount of liquid to be used for wetting the animal is previously fixed. According to another inventive feature, during wetting the animal it is checked whether droplets are formed on the animal's skin or fall from the animal. According to a further inventive feature, wetting of the animal is stopped if formation of droplets is ascertained. Formation of droplets is not only disadvantageous to the liquid consumption, but may also result in certain parts, such as e.g. the teats, of the animal being undesirably wetted by the liquid. By evaporation of the liquid on the skin or between the hairs of the animal, the animal cools off. According to the invention, in particular the animal's back is cooled.

In accordance with another inventive feature, the air flow is regulated. More in particular the air flow is forcibly increased, e.g. by means of a ventilator. By causing the forced air to flow over the wetted surface of the animal, an even quicker cooling of the animal is achieved. Therefore, the invention also relates to a method in which first the degree of humidity is increased, as described in the foregoing, and then the air flow is regulated, which is also described in the foregoing.

For the purpose of being able to check and/or control the cooling process, according to an inventive feature, during and/or after regulation of the climate parameter, at least the temperature, in particular the temperature of the skin and/or the body and/or the ambient temperature in the vicinity of the animal, is determined. According to a further inventive feature, cooling of the animal is stopped when a previously set temperature is reached. For the purpose of being able to follow cooling even more accurately, according to an inventive feature, the animal's behaviour is observed during cooling, and cooling is stopped if the animal's behaviour changes. According to a further inventive feature, the animal's behaviour can be deduced from deviations from the number of movements of the animal'per unit of time.

According to a further inventive feature, the duration is adjustable. The duration of the treatment can also be calculated on the basis of historical data about previous actions related to the relevant animal. According to an aspect of the invention, this calculation can be made on the basis of the duration of milkings and/or pre-treatments and/or post-treatments of the relevant animal. According to again another inventive feature, regulation of one of the climate parameters is stopped when approximately three quarters of the action and/or the treatment has been performed. The latter measure is of importance to ensure that the animal leaves the stall after the action and/or the treatment has ended. If regulation of the climate parameters continues throughout the action and/or the treatment, this results in the animal only leaving the place well after the action and/or the treatment has ended. This may be very disadvantageous e.g. when milking is carried out by means of a milking robot, as it results in capacity reduction of the milking robot.

In accordance with a further inventive feature, during regulation of one of the climate parameters certain parts of the animal are shielded. More in particular the animal's head and the udder and/or the teats are shielded.

The invention will now be explained in further detail with reference to the accompanying drawings, in which
Figure 1 is a side view of a first embodiment of the invention, and
Figure 2 is a second embodiment of an implement according to the invention.

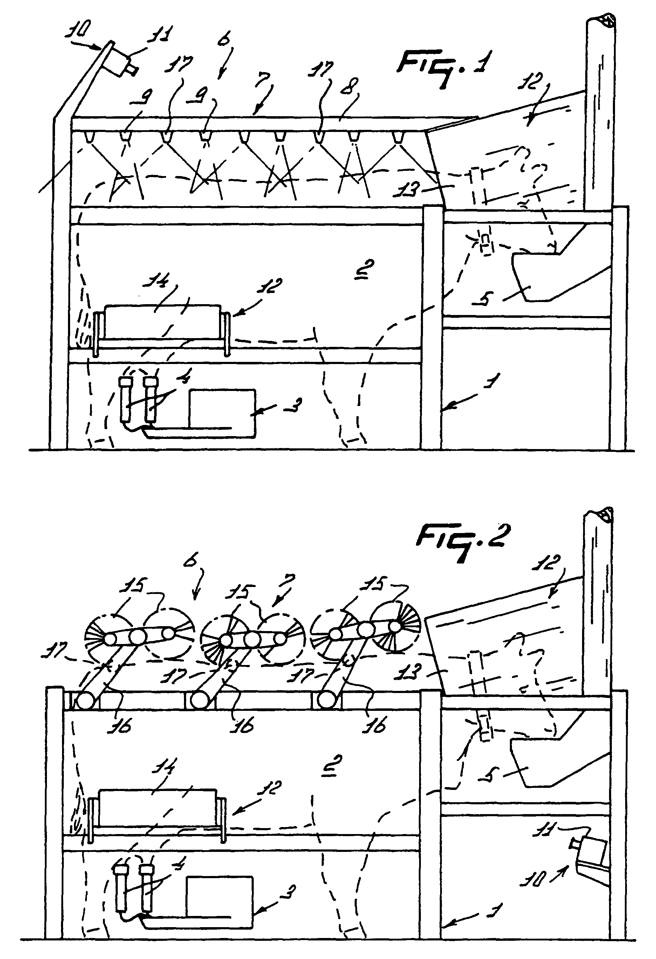

Figure 1 is a side view of a milk box 1 with a cow 2 present therein. The milk box 1 comprises a milking robot 3 with teat cups 4 which are connected automatically to the teats of the cow 2 by means of the milking robot 3. Near the front side of the milk box 1 there is further disposed a feeding trough 5 to which concentrate can be supplied in metered portions. The milk box 1 is further provided with regulating means 6 with the aid of which at least one previously defined climate parameter is set artificially in the milk box 1. The regulating means 6 comprise wetting means 7 with the aid of which at least the back of the cow 2 is wetted. The wetting means 7 comprise a sprayer beam 8 with nozzles 9, by means of which a liquid can be atomized to a fine spray. After the liquid reduced to a fine spray has been applied to the back of the cow 2, air is directed over the wetted surface by means of the sprayer beam 8 and the nozzles 9. In this manner the back of the cow 2 is cooled. During wetting of the cow 2 it is checked with the aid of the detection means 10 whether or not formation of droplets occurs. To that end the detection means 10 comprise a camera 11. In order to prevent certain parts of the cow 2 from coming into contact with the liquid, the milk box 1 is further provided with shielding means 12. In the present embodiment the shielding means 12 comprise a transparent shielding cap 13 which covers the head of the cow 2 during wetting. The shielding means 12 further comprise a second shielding cap 14 by means of which the udder of the cow 2 can be shielded. The second shielding cap 14 is pivotably fitted to the milk box 1.

Figure 2 shows a second embodiment of the invention, in which parts corresponding to those of the first embodiment are indicated by the same reference numerals. In the second embodiment of the invention, the wetting means 7 comprise motor-drivable brushes 15 which are provided with (non-shown) liquid supply means with the aid of which liquid can be supplied to the brushes during brushing. Thus, the liquid is rubbed in the hair of the cow 2 by means of the brushes 15. The motor-drivable brushes 15 are disposed on a pivotable arm 16 which is connected to the milk box 1. The pivotable arm 16 is further provided with air displacing means 17 with the aid of which air is directed over the wetted surface of the cow 2 after or during brushing.

## Claims

1. A method of luring an animal to a predetermined place, such as e.g. a milking stall and/or a feeding stall, where the animal lured undergoes a predetermined treatment, and/or a predetermined animal-related action, such as e.g. milking and/or feeding, is performed, whereby, at least during a predetermined stage of the treatment and/or the action, at least one previously defined climate parameter is set artificially in at least one part of the relevant place, wherein regulation of the climate parameter is performed during a fixed duration of the action and/or the treatment, **characterized in that** regulation of the climate parameter is performed during a previously fixed duration of the action and/or the treatment.

2. A method as claimed in claim 1, **characterized in that** the degree of humidity is regulated.

3. A method as claimed in claim 2, **characterized in that** the degree of humidity is increased.

4. A method as claimed in any one of the preceding claims, **characterized in that** a liquid is applied between the hairs and/or on the skin of the animal.

5. A method as claimed in claim 4, **characterized in that** the degree of humidity is regulated by atomizing a liquid to a fine spray and by dispersing same.

6. A method as claimed in claim 4 or 5, **characterized in that** the liquid is directly applied between the hairs and/or on the skin of the animal by rubbing and/or brushing.

7. A method as claimed in any one of the preceding claims, **characterized in that** for wetting an animal a previously fixed maximum amount of liquid is used per animal.

8. A method as claimed in any one of the preceding claims, **characterized in that** during wetting the animal it is checked whether droplets are formed on the animal's skin or fall from the animal.

9. A method as claimed in any one of the preceding claims, **characterized in that** wetting of the animal is stopped if formation of droplets is ascertained.

10. A method as claimed in any one of the preceding claims, **characterized in that** the back of the animal is cooled.

11. A method as claimed in any one of the preceding claims, **characterized in that** the air flow is regulated.

12. A method as claimed in claim 11, **characterized in that** the air flow is forced and increased by means of e.g. a ventilator.

13. A method as claimed in any one of the preceding claims, **characterized in that** first the degree of humidity is increased, as described in any one of claims 1 to 10, and then the air flow is regulated and/or forced, as described in claim 11 or 12.

14. A method as claimed in any one of the preceding claims, **characterized in that** during and/or after regulation of the climate parameters at least the temperature, in particular the temperature of the skin and/or the body and/or the ambient temperature in the vicinity of the animal, is determined.

15. A method as claimed in claim 14, **characterized in that** cooling of the animal is stopped when a previously set temperature is reached.

16. A method as claimed in claim 14 of 15, **characterized in that** during cooling the animal's behaviour is observed, and cooling is stopped if the animal's behaviour changes.

17. A method as claimed in any one of the preceding claims, **characterized in that** the animal's behaviour is deduced from deviations from the number of movements of the animal per unit of time.

18. A method as claimed in any one of the preceding claims, **characterized in that** the duration is adjustable.

19. A method as claimed in any one of the preceding claims, **characterized in that** the duration of the action and/or the treatment is calculated on the basis of historical data about previous actions related to the relevant animal.

20. A method as claimed in claim 19, **characterized in that** this calculation is made on the basis of the duration of milkings and/or pre-treatments and/or post-treatments of the relevant animal.

21. A method as claimed in any one of claims 1 to 19, **characterized in that** regulation of one of the climate parameters is stopped when approximately three quarters of the action and/or the treatment has been performed.

22. A method as claimed in any one of the preceding claims, **characterized in that** during regulation of one of the climate parameters certain parts of the animal are shielded.

## Patentansprüche

1. Verfahren zum Locken eines Tieres an einen vorgegebenen Ort, wie z. B. eine Melkbox und/oder eine Fütterungsbox, wo das angelockte Tier einer vorgegebenen Behandlung unterzogen wird und/oder eine vorgegebene tierbezogene Maßnahme, wie z. B. Melken und/oder Füttern, durchgeführt wird, wobei zumindest während einer vorgegebenen Phase der Behandlung und/oder der Maßnahme mindestens ein zuvor definierter Klimaparameter in mindestens einem Teil des betreffenden Ortes künstlich eingestellt wird, wobei die Regelung des Klimaparameters während einer festgelegten Dauer der Maßnahme und/oder der Behandlung erfolgt,
**dadurch gekennzeichnet, daß** die Regelung des Klimaparameters während einer zuvor festgelegten Dauer der Maßnahme und/oder der Behandlung erfolgt.

2. Verfahren nach Anspruch 1,
**dadurch gekennzeichnet, daß** der Grad der Feuchtigkeit geregelt wird.

3. Verfahren nach Anspruch 2,
**dadurch gekennzeichnet, daß** der Grad der Feuchtigkeit erhöht wird.

4. Verfahren nach einem der vorhergehenden Ansprüche,
**dadurch gekennzeichnet, daß** eine Flüssigkeit zwischen die Haare und/oder auf die Haut des Tieres befördert wird.

5. Verfahren nach Anspruch 4,
**dadurch gekennzeichnet, daß** der Grad der Feuchtigkeit dadurch geregelt wird, daß eine Flüssigkeit zu einem feinen Sprühnebel zerstäubt und dieser verteilt wird.

6. Verfahren nach Anspruch 4 oder 5,
**dadurch gekennzeichnet, daß** die Flüssigkeit durch Reiben und/oder Bürsten direkt zwischen die Haare und/oder auf die Haut des Tieres befördert wird.

7. Verfahren nach einem der vorhergehenden Ansprüche,
**dadurch gekennzeichnet, daß** zum Befeuchten eines Tieres eine zuvor festgelegte, maximale Flüssigkeitsmenge pro Tier verwendet wird.

8. Verfahren nach einem der vorhergehenden Ansprüche,
**dadurch gekennzeichnet, daß** während des Befeuchtens des Tieres geprüft wird, ob sich auf der Haut des Tieres Tröpfchen bilden oder von dem Tier herabfallen.

9. Verfahren nach einem der vorhergehenden Ansprüche,
**dadurch gekennzeichnet, daß** das Befeuchten des Tieres beendet wird, wenn die Bildung von Tröpfchen festgestellt wird.

10. Verfahren nach einem der vorhergehenden Ansprüche,
**dadurch gekennzeichnet, daß** der Rücken des Tieres gekühlt wird.

11. Verfahren nach einem der vorhergehenden Ansprüche,
**dadurch gekennzeichnet, daß** der Luftstrom geregelt wird.

12. Verfahren nach Anspruch 11,
**dadurch gekennzeichnet, daß** der Luftstrom, z. B. mittels eines Ventilators, erzeugt und verstärkt wird.

13. Verfahren nach einem der vorhergehenden Ansprüche,
**dadurch gekennzeichnet, daß** zuerst der Grad der Feuchtigkeit erhöht wird, wie in einem der Ansprüche 1 bis 10 beschrieben, und dann der Luftstrom erzeugt und/oder geregelt wird, wie in Anspruch 11 oder 12 beschrieben.

14. Verfahren nach einem der vorhergehenden Ansprüche,
**dadurch gekennzeichnet, daß** während und/oder nach dem Regeln der Klimaparameter zumindest die Temperatur, insbesondere die Temperatur der Haut und/oder des Körpers und/oder die Umgebungstemperatur in der Nähe des Tieres ermittelt wird.

15. Verfahren nach Anspruch 14,
**dadurch gekennzeichnet, daß** das Kühlen des Tieres beendet wird, wenn eine voreingestellte Temperatur erreicht ist.

16. Verfahren nach Anspruch 14 oder 15,
**dadurch gekennzeichnet, daß** während des Kühlens das Verhalten des Tieres beobachtet und das Kühlen beendet wird, wenn sich das Verhalten des Tieres ändert.

17. Verfahren nach einem der vorhergehenden Ansprüche,
**dadurch gekennzeichnet, daß** das Verhalten des Tieres von Abweichungen von der Anzahl der Bewegungen des Tieres pro Zeiteinheit abgeleitet wird.

18. Verfahren nach einem der vorhergehenden Ansprüche,
**dadurch gekennzeichnet, daß** die Dauer einstellbar ist.

19. Verfahren nach einem der vorhergehenden Ansprüche,
**dadurch gekennzeichnet, daß** die Dauer der Maßnahme und/oder der Behandlung auf der Basis von historischen Daten über frühere Maßnahmen bezüglich des betreffenden Tieres berechnet wird.

20. Verfahren nach Anspruch 19,
**dadurch gekennzeichnet, daß** diese Berechnung auf der Basis der Dauer von Melkvorgängen und/oder Vorbehandlungen und/oder Nachbehandlungen des betreffenden Tieres erfolgt.

21. Verfahren nach einem der Ansprüche 1 bis 19,
**dadurch gekennzeichnet, daß** das Regeln eines der Klimaparameter beendet wird, wenn etwa Dreiviertel der Maßnahme und/oder der Behandlung durchgeführt sind.

22. Verfahren nach einem der vorhergehenden Ansprüche,
**dadurch gekennzeichnet, daß** während der Regelung eines der Klimaparameter bestimmte Teile des Tieres abgeschirmt sind.

## Revendications

1. Procédé destiné à attirer un animal en un lieu prédéterminé, tel que par exemple une salle de traite et/ou une salle d'alimentation, où l'animal attiré reçoit un traitement prédéterminé, et/ou une action prédéterminée liée à l'animal, telle que par exemple la traite et/ou l'alimentation, est exécutée, moyennant quoi, au moins pendant une étape prédéterminée du traitement et/ou de l'action, au moins un paramètre de climat précédemment défini est fixé artificiellement dans au moins une partie du lieu correspondant, dans lequel la régulation du paramètre de climat est exécutée pendant une durée fixée de l'action et/ou du traitement, **caractérisé en ce que** la régulation du paramètre de climat est exécutée pendant une durée précédemment fixée de l'action et/ou du traitement.

2. Procédé selon la revendication 1, **caractérisé en ce que** le degré d'humidité est régulé.

3. Procédé selon la revendication 2, **caractérisé en ce que** le degré d'humidité est augmenté.

4. Procédé selon l'une quelconque des revendications précédentes, **caractérisé en ce qu'**un liquide est appliqué entre les poils et/ou sur la peau de l'animal.

5. Procédé selon la revendication 4, **caractérisé en ce que** le degré d'humidité est régulé en atomisant un liquide pour obtenir une fine pulvérisation et en dispersant celui-ci.

6. Procédé selon la revendication 4 ou 5, **caractérisé en ce que** le liquide est appliqué directement entre les poils et/ou sur la peau de l'animal par frottement et/ou brossage.

7. Procédé selon l'une quelconque des revendications précédentes, **caractérisé en ce que** pour mouiller un animal, une quantité de liquide maximale précédemment fixée est utilisée par animal.

8. Procédé selon l'une quelconque des revendications précédentes, **caractérisé en ce que** pendant le mouillage de l'animal, on vérifie si des gouttelettes sont formées sur la peau de l'animal ou tombent de l'animal.

9. Procédé selon l'une quelconque des revendications précédentes, **caractérisé en ce que** le mouillage de l'animal est arrêté si la formation de gouttelettes est établie.

10. Procédé selon l'une quelconque des revendications précédentes, **caractérisé en ce que** le dos de l'animal est refroidi.

11. Procédé selon l'une quelconque des revendications précédentes, **caractérisé en ce que** l'écoulement d'air est régulé.

12. Procédé selon la revendication 11, **caractérisé en ce que** l'écoulement d'air est forcé et augmenté au moyen de par exemple un ventilateur.

13. Procédé selon l'une quelconque des revendications précédentes, **caractérisé en ce que** tout d'abord, le degré d'humidité est augmenté, comme cela est décrit dans l'une quelconque des revendications 1 à 10, et ensuite l'écoulement d'air est régulé et/ou forcé, comme cela est décrit dans la revendication 11 ou 12.

14. Procédé selon l'une quelconque des revendications précédentes, **caractérisé en ce que** pendant et/ou après la régulation des paramètres de climat, au moins la température, en particulier la température de la peau et/ou du corps de l'animal et/ou la température ambiante au voisinage de celui-ci, est déterminée.

15. Procédé selon la revendication 14, **caractérisé en ce que** le refroidissement de l'animal est arrêté lorsqu'une température précédemment fixée est atteinte.

16. Procédé selon la revendication 14 ou 15, **caractérisé en ce que** pendant le refroidissement, le comportement de l'animal est observé, et le refroidissement est arrêté si le comportement de l'animal change.

17. Procédé selon l'une quelconque des revendications précédentes, **caractérisé en ce que** le comportement de l'animal est déduit des déviations du nombre de mouvements de l'animal par unité de temps.

18. Procédé selon l'une quelconque des revendications précédentes, **caractérisé en ce que** la durée est réglable.

19. Procédé selon l'une quelconque des revendications précédentes, **caractérisé en ce que** la durée de l'action et/ou du traitement est calculée en se basant sur des données historiques concernant les précédentes actions liées à l'animal correspondant.

20. Procédé selon la revendication 19, **caractérisé en ce que** ce calcul est réalisé en se basant sur la durée des traites et/ou des pré-traitements et/ou des post-traitements de l'animal correspondant.

21. Procédé selon l'une quelconque des revendications 1 à 19, **caractérisé en ce que** la régulation d'un des paramètres de climat est arrêtée lorsque approximativement les trois quarts de l'action et/ou du traitement ont été exécutés.

22. Procédé selon l'une quelconque des revendications précédentes, **caractérisé en ce que** pendant la régulation d'un des paramètres de climat, certaines parties de l'animal sont protégées.
